(19) Europäisches Patentamt
European Patent Office
Office européen des brevets

(11) **EP 3 522 608 B1**

(12) **EUROPEAN PATENT SPECIFICATION**

(45) Date of publication and mention
of the grant of the patent:
**19.01.2022 Bulletin 2022/03**

(21) Application number: **19165270.0**

(22) Date of filing: **17.08.2012**

(51) International Patent Classification (IPC):
*H04W 48/10* *(2009.01)*      *H04W 72/02* *(2009.01)*
*H04W 88/10* *(2009.01)*      *H04W 88/06* *(2009.01)*
*H04W 48/18* *(2009.01)*      *H04W 48/20* *(2009.01)*

(52) Cooperative Patent Classification (CPC):
**H04W 48/10; H04W 48/20**

(54) **METHOD AND APPARATUS FOR SUPPORTING MULTIPLE FREQUENCY BANDS IN MOBILE COMMUNICATION SYSTEM**

VERFAHREN UND VORRICHTUNG ZUR UNTERSTÜTZUNG MEHRERER FREQUENZBÄNDER IN EINEM MOBILKOMMUNIKATIONSSYSTEM

PROCÉDÉ ET APPAREIL POUR PRENDRE EN CHARGE DES BANDES DE FRÉQUENCES MULTIPLES DANS UN SYSTÈME DE COMMUNICATION MOBILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.08.2011 US 201161526223 P**
**06.09.2011 US 201161531185 P**
**06.02.2012 US 201261595646 P**
**19.03.2012 US 201261612950 P**
**21.05.2012 US 201261649910 P**
**30.05.2012 US 201261653026 P**
**09.08.2012 KR 20120087076**

(43) Date of publication of application:
**07.08.2019 Bulletin 2019/32**

(62) Document number(s) of the earlier application(s) in accordance with Art. 76 EPC:
**12826373.8 / 2 749 081**

(73) Proprietor: **Samsung Electronics Co., Ltd.**
**Suwon-si, Gyeonggi-do, 16677 (KR)**

(72) Inventors:
• **KIM, Sang Bum**
**Gyeonggi-do 16677 (KR)**
• **KIM, Soeng Hun**
**Gyeonggi-do 16677 (KR)**
• **VAN LIESHOUT, Gert Jan**
**Gyeonggi-do 16677 (KR)**
• **VAN DER VELDE, Himke**
**Gyeonggi-do 16677 (KR)**

(74) Representative: **Nederlandsch Octrooibureau**
**P.O. Box 29720**
**2502 LS The Hague (NL)**

(56) References cited:
**WO-A1-2012/108811**

• **ERICSSON ET AL: "Multiple frequency band indicators per cell", 3GPP DRAFT; R2-114299 MULTIPLE FBI, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Athens, Greece; 20110822, 16 August 2011 (2011-08-16), pages 1/5-5/5, XP050540038,**
• **ERICSSON ET AL: "Multiple frequency band indicators per cell", 3GPP DRAFT; R2-114301 36.331 CR MULTIPLE FBI, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Athens, Greece; 20110822, 16 August 2011 (2011-08-16), pages 1-7, XP050540040,**

- "3rd Generation Partnership Project; Technical Specification Group Radio Access Network; Evolved Universal Terrestrial Radio Access (E-UTRA); User Equipment (UE) radio transmission and reception (Release 10)", 3GPP STANDARD; 3GPP TS 36.101, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. V10.3.0, 21 June 2011 (2011-06-21), pages 1-237, XP050553331, [retrieved on 2011-06-21]

**Description**

[Technical Field]

The present invention relates to a mobile communication system. More particularly, the present invention relates to a method and apparatus for supporting multiple frequency bands efficiently in a mobile communication system.

[Background Art]

Mobile communication systems were developed to provide subscribers with voice communication services while on the move. With the advancement of communications technologies, the mobile communication systems have evolved to support high speed data communication services as well as the standard voice communication services. Recently, as one of the next generation mobile communication systems, Long Term Evolution Advanced (LTE-A) is being standardized by the 3rd Generation Partnership Project (3GPP). LTE-A is a technology designed to provide high speed packet-based communication of up to 100 Mbps.

Several schemes for LTE-A are being discussed including one scheme for reducing the number of nodes located in a communication path by simplifying a configuration of the network, and another scheme for maximally approximating wireless protocols to wireless channels. The 3GPP standard contribution R2-114299 "Multiple frequency band indicators per cell" provides solutions to support broadcasting of multiple frequency bandwidth indicators for a cell.

Meanwhile, unlike voice service, a data service is provided on a resource determined according to an amount of data to be transmitted and channel conditions. Accordingly, the wireless communication system, especially for cellular communication, is provided with a scheduler that manages transmission resource allocation in consideration of a needed resource amount, channel conditions, amount of data, etc. This is the case with the LTE-A system as the next generation mobile communication system, and in this case the scheduler is located at a base station and manages the transmission resource allocation.

[Disclosure of Invention]

[Technical Problem]

In LTE-A Release-11, a new frequency band that overlaps a legacy frequency band is added. Although the frequency bands are used in different areas, a roaming terminal should be capable of operating on both of the overlapped frequency bands.

Therefore, a need exists for a technique for supporting a roaming terminal that is capable of operating on both of the overlapped frequency bands.

The above information is presented as background information only to assist with an understanding of the present disclosure. No determination has been made, and no assertion is made, as to whether any of the above might be applicable as prior art with regard to the present invention.

[Solution to Problem]

Aspects of the present invention are to address the above-mentioned problems and/or disadvantages and to provide at least the advantages described below. The invention is defined by the independent claims. Preferred embodiments are defined by the dependent claims.

Other aspects, advantages, and salient features of the invention will become apparent to those skilled in the art from the following detailed description, which, taken in conjunction with the annexed drawings, discloses exemplary embodiments of the invention.

[Advantageous Effects of Invention]

The method and apparatus for supporting multiple frequency bands according to exemplary embodiments of the present invention are capable of supporting multiple frequency bands efficiently in an LTE-A Release-11 system to which new frequency bands are added as overlapping with the legacy frequency band.

[Brief Description of Drawings]

The above and other aspects, features, and advantages of certain exemplary embodiments of the present invention will be more apparent from the following description taken in conjunction with the accompanying drawings, in which:

FIG. 1 is a signaling diagram illustrating a procedure for notifying a User Equipment (UE) of a frequency band and determining an uplink center frequency, an uplink transmission power, and downlink center frequencies of neighbor cells in a Long Term Evolution (LTE) system according to an exemplary embodiment of the present invention;

FIG. 2 is a diagram illustrating a configuration of frequency band of band 26 on which a legacy frequency band and a newly added frequency band are overlapped according to an exemplary embodiment of the present invention;

FIG. 3 is a signaling diagram illustrating a procedure for selecting one of frequency bands indicated by an ext-freqBandIndicator Information Element (IE) in a method according to an exemplary embodiment of the present invention;

FIG. 4 is a flowchart illustrating the an evolved Node B (eNB) operation of a method according to an exemplary embodiment of the present invention;

FIG. 5 is a flowchart illustrating eNB and UE operations of a method according to an exemplary embodiment of the present invention;

FIG. 6 is a flowchart illustrating a UE operation of a method according to an exemplary embodiment of the present invention;

FIG. 7 is a block diagram illustrating a configuration of a UE according to an exemplary embodiment of the present invention; and

FIG. 8 is a block diagram illustrating a configuration of an eNB according to an exemplary embodiment of the present invention.

Throughout the drawings, it should be noted that like reference numbers are used to depict the same or similar elements, features, and structures.

[Mode for the Invention]

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope of the invention as defined by the claims.

In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Exemplary embodiments of the present invention relate to a method and apparatus for supporting multiple frequency bands efficiently in a mobile communication system. The present disclosure proposes a method for informing a terminal of multiple frequency bands and determining a center frequency of an uplink frequency band, an uplink transmission power, and center frequencies of downlink bands of neighbor cells in a mobile communication system supporting multiple frequency bands.

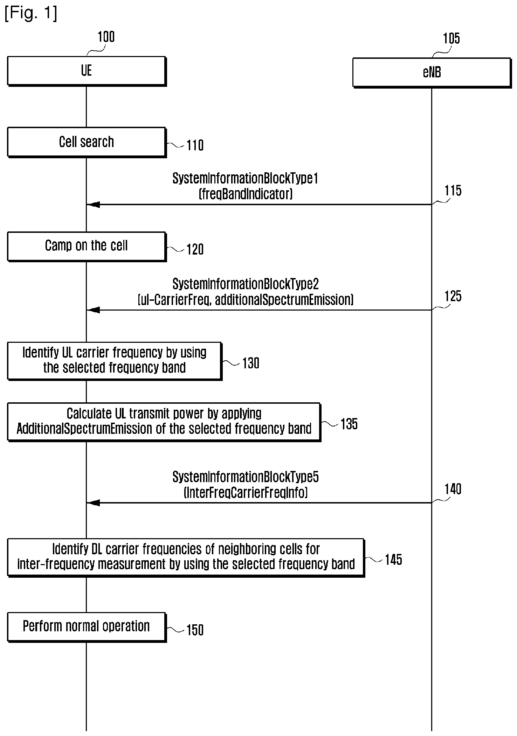

Prior to the explanation of the exemplary embodiments of the present invention, a brief description is made of the method for informing a User Equipment (UE) of the frequency band and determining uplink center frequency, uplink transmission power, and center frequencies of neighbor cells in the legacy Long Term Evolution (LTE) technology with reference to FIG. 1.

FIG. 1 is a signaling diagram illustrating a procedure for notifying a UE of a frequency band and determining an uplink center frequency, an uplink transmission power, and downlink center frequencies of neighbor cells in an LTE system according to an exemplary embodiment of the present invention.

Referring to FIG. 1, the UE 100 performs cell searching to discover a cell to camp on at step 110. Afterward, if the UE 100 is to establish a connection, the UE 100 makes a request to the cell to which it has camped for service.

If a cell having an appropriate signal strength is found, the UE 100 receives SystemInformationBlockType1 (SIB1) (hereinafter, interchangeably recited with the term 'first system information') broadcast by an evolved Node B (eNB) 105 of the corresponding cell at step 115. The SIB1 includes a freqBandIndicator Information Element (IE) (hereinafter, interchangeably recited with the term 'frequency band indicator'). This IE indicates the frequency band used in the cell. The IE is set to a value selected in the range from 1 to 64, and each value indicates the operating frequency bands specified in the LTE standard.

Table 1 shows the operating frequency bands of LTE specified in the LTE standard TS36.101. The leftmost column of Table 1 matches the value indicated by the IE, and the frequency bands corresponding to each indication value are shown in the right columns. The UE 100 determines a cell it camps on based on the frequency band information of the SIB1.

Table 1 describes an Evolved-Universal Terrestrial Radio Access (E-UTRA) operating bands.

[Table 1]

| E-UTRA Operating Band | Uplink (UL) operating band Base Station (BS) receive UE transmit | Downlink (DL) operating band BS transmit UE receive | Duplex Mode |
|---|---|---|---|
| | FUL_low- FUL_high | FDL_low-FDL_high | |
| 1 | 1920 MHz - 1980 MHz | 2110 MHz - 2170 MHz | FDD |
| 2 | 1850 MHz - 1910 MHz | 1930 MHz - 1990 MHz | FDD |
| 3 | 1710 MHz - 1785 MHz | 1805 MHz - 1880 MHz | FDD |
| 4 | 1710 MHz - 1755 MHz | 2110 MHz - 2155 MHz | FDD |
| 5 | 824 MHz - 849 MHz | 869 MHz - 894MHz | FDD |
| 61 | 830 MHz - 840 MHz | 875 MHz - 885 MHz | FDD |
| 7 | 2500 MHz - 2570 MHz | 2620 MHz - 2690 MHz | FDD |
| 8 | 880 MHz - 915 MHz | 925 MHz - 960 MHz | FDD |
| 9 | 1749.9 MHz - 1784.9 MHz | 1844.9 MHz - 1879.9 MHz | FDD |
| 10 | 1710 MHz - 1770 MHz | 2110 MHz - 2170 MHz | FDD |
| 11 | 1427.9 MHz - 1447.9 MHz | 1475.9 MHz - 1495.9 MHz | FDD |
| 12 | 699 MHz - 716 MHz | 729 MHz - 746 MHz | FDD |
| 13 | 777 MHz - 787 MHz | 746 MHz - 756 MHz | FDD |
| 14 | 788 MHz - 798 MHz | 758 MHz - 768 MHz | FDD |
| 15 | Reserved | Reserved | FDD |
| 16 | Reserved | Reserved | FDD |
| 17 | 704 MHz - 716 MHz | 734 MHz - 746 MHz | FDD |
| 18 | 815 MHz - 830 MHz | 860 MHz - 875 MHz | FDD |
| 19 | 830 MHz - 845 MHz | 875 MHz - 890 MHz | FDD |
| 20 | 832 MHz - 862 MHz | 791 MHz - 821 MHz | FDD |
| 21 | 1447.9 MHz - 1462.9 MHz | 1495.9 MHz - 1510.9 MHz | FDD |
| 22 | 3410 MHz - 3490 MHz | 3510 MHz - 3590 MHz | FDD |
| 23 | 2000 MHz - 2020 MHz | 2180 MHz - 2200 MHz | FDD |
| 24 | 1626.5 MHz - 1660.5 MHz | 1525 MHz - 1559 MHz | FDD |
| 25 | 1850 MHz - 1915 MHz | 1930 MHz - 1995 MHz | FDD |
| 26 | 814 MHz - 849 MHz | 859 MHz - 894 MHz | FDD |
| ... | | | |
| 33 | 1900 MHz - 1920 MHz | 1900 MHz - 1920 MHz | TDD |
| 34 | 2010 MHz - 2025 MHz | 2010 MHz - 2025 MHz | TDD |
| 35 | 1850 MHz - 1910 MHz | 1850 MHz - 1910 MHz | TDD |
| 36 | 1930 MHz - 1990 MHz | 1930 MHz - 1990 MHz | TDD |

(continued)

| E-UTRA Operating Band | Uplink (UL) operating band Base Station (BS) receive UE transmit | Downlink (DL) operating band BS transmit UE receive | Duplex Mode |
|---|---|---|---|
| | FUL_low- FUL_high | FDL_low-FDL_high | |
| 37 | 1910 MHz - 1930 MHz | 1910 MHz - 1930 MHz | TDD |
| 38 | 2570 MHz - 2620 MHz | 2570 MHz - 2620 MHz | TDD |
| 39 | 1880 MHz - 1920 MHz | 1880 MHz - 1920 MHz | TDD |
| 40 | 2300 MHz - 2400 MHz | 2300 MHz - 2400 MHz | TDD |
| 41 | 2496 MHz 2690 MHz | 2496 MHz 2690 MHz | TDD |
| 42 | 3400 MHz - 3600 MHz | 3400 MHz - 3600 MHz | TDD |
| 43 | 3600 MHz - 3800 MHz | 3600 MHz - 3800 MHz | TDD |
| NOTE 1: Band 6 is not applicable | | | |

If the UE 100 supports the operating frequency indicated in the frequencybandIndicator IE and if the corresponding frequency band is authenticated, the UE 105 determines to camp on the corresponding cell at step 120. At this time, the E-UTRA Cell IDentifier (ID) and Tracking Area Code (TAC) acquired from the SIB1 is delivered to a higher layer of the UE 105.

Otherwise, if it is not possible to camp on the cell, the UE 105 performs the cell searching process again to discovery another cell. As a consequence, if a cell to camp on is found, the UE 105 receives SIB2 (hereinafter, interchangeably recited with the term 'second system information) from the eNB 105 at step 125.

The SIB2 includes a UL-CarrierFreq IE (hereinafter, interchangeably recited with the term 'uplink carrier frequency') and an additionalSpectrumEmission IE (hereinafter, interchangeably recited with the term 'additional spectrum emission'). The information included in SIB2 is at least one value used for calculating uplink center frequency and uplink transmission power.

The UE 100 calculates the uplink center frequency in the frequency band at step 130. The uplink center frequency is calculated by using Equation (1):

$$FUL = FUL\_low + 0.1 (NUL - Noffs\text{-}UL) \qquad \ldots \text{Equation} \qquad (1)$$

In Equation (1), NUL denotes a UL-CarrierFreq IE value included in SIB2 and matches to an Absolute Radio Frequency Channel Number (ARFCN). The ARFCN is a value in the range from 0 to 65535 and is used to acquire the uplink and downlink center frequencies. FUL_low denotes the lowest uplink frequency of the selected frequency band, and NOffs-UL and FUL_low are defined in the LTE standard TS36.101.

Table 2 shows the NOffs-UL and FUL_low values applicable per operating frequency band. In order to calculate the center frequency in uplink, the operating frequency band should be known.

[Table 2]

| E-UTRA Operating Band | Downlink | | | Uplink | | |
|---|---|---|---|---|---|---|
| | FDL_low (MHz) | NOffs-DL | Range of NDL | FUL_low (MHz) | NOffs-UL | Range of NUL |
| 1 | 2110 | 0 | 0 - 599 | 1920 | 18000 | 18000 -18599 |
| 2 | 1930 | 600 | 600-1199 | 1850 | 18600 | 18600 - 19199 |
| 3 | 1805 | 1200 | 1200- 1949 | 1710 | 19200 | 19200 - 19949 |
| 4 | 2110 | 1950 | 1950 - 2399 | 1710 | 19950 | 19950 - 20399 |

(continued)

| E-UTRA Operating Band | Downlink | | | Uplink | | |
|---|---|---|---|---|---|---|
| | FDL_low (MHz) | NOffs-DL | Range of NDL | FUL_low (MHz) | NOffs-UL | Range of NUL |
| 5 | 869 | 2400 | 2400 - 2649 | 824 | 20400 | 20400 - 20649 |
| 6 | 875 | 2650 | 2650 - 2749 | 830 | 20650 | 20650 - 20749 |
| 7 | 2620 | 2750 | 2750 - 3449 | 2500 | 20750 | 20750 - 21449 |
| 8 | 925 | 3450 | 3450 - 3799 | 880 | 21450 | 21450 - 21799 |
| 9 | 1844.9 | 3800 | 3800 - 4149 | 1749.9 | 21800 | 21800 - 22149 |
| 10 | 2110 | 4150 | 4150-4749 | 1710 | 22150 | 22150 - 22749 |
| 11 | 1475.9 | 4750 | 4750 - 4949 | 1427.9 | 22750 | 22750 - 22949 |
| 12 | 729 | 5010 | 5010-5179 | 699 | 23010 | 23010 - 23179 |
| 13 | 746 | 5180 | 5180 - 5279 | 777 | 23180 | 23180 - 23279 |
| 14 | 758 | 5280 | 5280 - 5379 | 788 | 23280 | 23280 - 23379 |
| ... | | | | | | |
| 17 | 734 | 5730 | 5730 - 5849 | 704 | 23730 | 23730 - 23849 |
| 18 | 860 | 5850 | 5850 - 5999 | 815 | 23850 | 23850 - 23999 |
| 19 | 875 | 6000 | 6000 - 6149 | 830 | 24000 | 24000 - 24149 |
| 20 | 791 | 6150 | 6150 - 6449 | 832 | 24150 | 24150 - 24449 |
| 21 | 1495.9 | 6450 | 6450 - 6599 | 1447.9 | 24450 | 24450 - 24599 |
| 22 | 3510 | 6600 | 6600 - 7399 | 3410 | 24600 | 24600 -25399 |
| 23 | 2180 | 7500 | 7500 - 7699 | 2000 | 25500 | 25500 - 25699 |
| 24 | 1525 | 7700 | 7700 - 8039 | 1626.5 | 25700 | 25700 - 26039 |
| 25 | 1930 | 8040 | 8040 - 8689 | 1850 | 26040 | 26040 - 26689 |
| 26 | 859 | 8690 | 8690 - 9039 | 814 | 26690 | 26690 - 27039 |
| ... | | | | | | |

(continued)

| E-UTRA Operating Band | Downlink | | | Uplink | | |
|---|---|---|---|---|---|---|
| | FDL_low (MHz) | NOffs-DL | Range of NDL | FUL_low (MHz) | NOffs-UL | Range of NUL |
| 33 | 1900 | 36000 | 36000 - 36199 | 1900 | 36000 | 36000 - 36199 |
| 34 | 2010 | 36200 | 36200 - 36349 | 2010 | 36200 | 36200 - 36349 |
| 35 | 1850 | 36350 | 36350 - 36949 | 1850 | 36350 | 36350 - 36949 |
| 36 | 1930 | 36950 | 36950 - 37549 | 1930 | 36950 | 36950 - 37549 |
| 37 | 1910 | 37550 | 37550 - 37749 | 1910 | 37550 | 37550 - 37749 |
| 38 | 2570 | 37750 | 37750 - 38249 | 2570 | 37750 | 37750 - 38249 |
| 39 | 1880 | 38250 | 38250 - 38649 | 1880 | 38250 | 38250 - 38649 |
| 40 | 2300 | 38650 | 38650 - 39649 | 2300 | 38650 | 38650 - 39649 |
| 41 | 2496 | 39650 | 39650 -41589 | 2496 | 39650 | 39650 - 41589 |
| 42 | 3400 | 41590 | 41590 - 43589 | 3400 | 41590 | 41590 - 43589 |
| 43 | 3600 | 43590 | 43590 - 45589 | 3600 | 43590 | 43590 - 45589 |

Next, the UE 100 calculates the uplink transmission power using the additionalSpectrumEmission IE at step 135. This IE is used to derive an Additional Maximum Power Reduction (A-MPR) value used for calculating uplink transmission power along with the operating frequency band. The relationship of A-MPR according to the additionSpectrumEmission IE is specified in the LTE standard TS36.101 as shown in Table 3.

[Table 3]

| Network Signaling value | Requirements (sub-clause) | E-UTRA Band | Channel bandwidth (MHz) | Resources Blocks (NRB) | A-MPR (dB) |
|---|---|---|---|---|---|
| NS_01 | 6.6.2.1.1 | Table 5.5-1 | 1.4, 3, 5, 10, 15, 20 | Table 5.6-1 | NA |
| NS_03 | 6.6.2.2.1 | 2, 4,10, 23, 25, 35, 36 | 3 | >5 | ≤ 1 |
| | | | 5 | >6 | ≤ 1 |
| | | | 10 | >6 | ≤ 1 |
| | | | 15 | >8 | ≤ 1 |
| | | | 20 | >10 | ≤ 1 |
| NS_04 | 6.6.2.2.2 | 41 | 5 | >6 | ≤ 1 |
| | | | 10, 15,20 | See Table 6.2.4-4 | |
| NS_05 | 6.6.3.3.1 | 1 | 10,15,20 | ≥ 50 | ≤ 1 |
| NS_06 | 6.6.2.2.3 | 12, 13, 14, 17 | 1.4, 3, 5, 10 | Table 5.6-1 | n/a |

(continued)

| Network Signaling value | Requirements (sub-clause) | E-UTRA Band | Channel bandwidth (MHz) | Resources Blocks (NRB) | A-MPR (dB) |
|---|---|---|---|---|---|
| NS_07 | 6.6.2.2.3 6.6.3.3.2 | 13 | 10 | Table 6.2.4-2 | Table 6.2.4-2 |
| NS_08 | 6.6.3.3.3 | 19 | 10, 15 | > 44 | ≤ 3 |
| NS_09 | 6.6.3.3.4 | 21 | 10, 15 | > 40 | ≤ 1 |
| | | | | > 55 | ≤ 2 |
| NS_10 | | 20 | 15, 20 | Table 6.2.4-3 | Table 6.2.4-3 |
| NS_11 | 6.6.2.2.1 | 231 | 1.4, 3, 5, 10 | Table 6.2.4-5 | Table 6.2.4-5 |
| | | | | | |
| NS_32 | - | - | - | - | - |
| Note 1: Applies to the lower block of Band 23, i.e., a carrier placed in the 2000-2010 MHz region. | | | | | |

The leftmost column of Table 3 contains the NS values indicating additionSpectrumEmission IE values, e.g., if additionalSpectrumEmission is 1, this indicates NS_01 and, if 3, this indicates NS_03.

The maximum transmission power 1 of a certain serving cell c PCMAX,c is determined by Formula (2), and the highest value of the maximum transmission power 1 of the serving cell c PCMAX_H,c is determined by Equation (3), and the lowest value of the maximum transmission power 1 of the service cell c PCMAX_L,c is determined by Equation (4):

$$PCMAX\_L,c ≤ PCMAX,c ≤ PCMAX\_H,c \qquad … \text{Equation} \qquad (2)$$

$$PCMAX\_H,c = MIN \{PEMAX,c, PPowerClass\} \qquad … \text{Equation} \qquad (3)$$

$$PCMAX\_L,c = MIN \{PEMAX,c\text{-}TC, c, PCMAX\_H,c\text{-}MPR \; c \text{ - } A\text{-}MPR \; c \text{ - } TC, c \} \qquad … \text{Equation (4)}$$

where, PEMAX,c , ∆TC,c , PPowerClass , MPRc, and A-MPRc are specified in the 3GPP standard TS36.101.

PEMAX,c denotes a maximum allowed uplink transmission power in the service cell c which is transmitted from the eNB 105 to the UE 100. PPowerClass denotes the nominal maximum transmission power determined according to the physical characteristics of the UE 100. The power class of the UE 100 is determined at the manufacturing stage, and the UE 100 reports its power class to the network using a predetermined Radio Resource Control (RRC) message.

∆TC,c , MPRc, AND A-MPRc are parameters for defining a value that is capable of adjusting the maximum transmission power of the UE 100 in the serving cell c to meet the unintended emission of interference to the neighbor channel. MPRc is a value determined according to the transmission amount (i.e., bandwidth) and modulation scheme. A-MPRc is a value determined according to the frequency band of uplink transmission, geographical characteristic, uplink transmission bandwidth, etc. A-MPRc is used for preparing the case where the frequency band is especially sensitive to the spurious emissions according to geographical characteristics and frequency band characteristics. In a case where the uplink transmission is performed at a boundary of the frequency band, ∆TC,c is used to allow for additional transmission power adjustment. If the uplink transmission is performed at a lowest 4 MHz or a highest 4 MHz of a certain frequency band, the UE 100 sets ∆TC,c to 1.5 DB, and otherwise, sets ∆TC,c to 0.

Referring back to FIG. 1, the UE 100 receives SIB5 at step 140. The SIB5 includes InterFreqCarrierFreqlnfo IE (hereinafter, interchangeably recited with the term 'neighbor frequency information'). According to the number of neighbor E-UTRAs, multiple InterFreqCarrierFreqlnfo IEs can be included. Each IE matches to a neighbor E-UTRA cell. This IE is used to derive the downlink center frequency of the neighbor E-UTRA cell to perform inter-frequency measurement.

The UE calculates the downlink center frequency of the neighbor E-UTRA cell to perform the inter-frequency measurement at step 145. The downlink center frequency of the neighbor E-UTRA cell is calculated according to Equation (5).

$$FUL = FDL\_low + 0.1(NDL - NOffs-DL) \qquad \dots \text{Equation} \qquad (5)$$

where NDL denotes dl-CarrierFreq IE value included in the interFreqCarrierFreqInfo and matches to ARFCN. The FDL_low denotes the lowest downlink frequency of the selected frequency band. NOffs and FDL_low are defined in Table 2.

Afterward, the UE 100 performs normal operation at step 150. For example, the UE 100 is capable of performing one of cell reselection, paging message reception monitoring, system information change monitoring, RRC connection configuration, and data communication, as needed.

In LTE-A release 11, a new frequency band having an operating frequency overlapped with the operating frequency of the legacy frequency band. For example, band 26 in Table 1 is the frequency band newly added in Rel-11 and its operating frequency is overlapped with those indicated by legacy bands 5, 18, and 19.

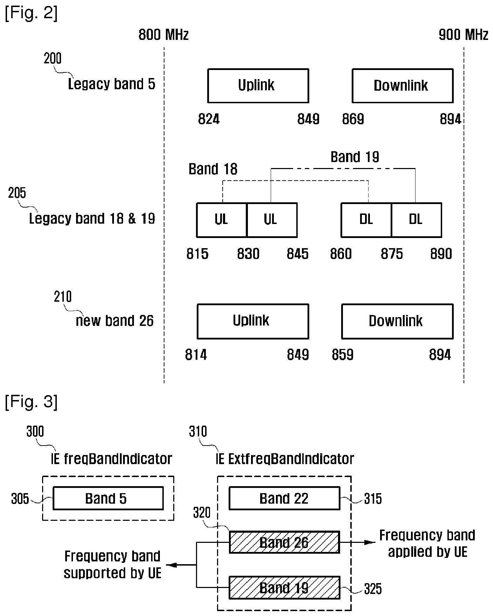

FIG. 2 is a diagram illustrating a configuration of frequency band of band 26 on which a legacy frequency band and a newly added frequency band are overlapped accordingly to an exemplary embodiment of the present invention.

Referring to FIG. 2, band 26 210 is composed of an uplink in the range of 814 ~ 849 MHz and a downlink in the range of 859 ~ 894 MHz. Meanwhile, legacy band 5 200 and legacy bands 18 and 19 205 exist in the range of 800 ~ 900 MHz so as to be overlapped with the frequency band of the newly added band 26 210. Although these frequency bands are used in different areas, it is desired for a roaming UE to support all of these overlapped frequencies. In the present exemplary embodiment, when a specific operating frequency belongs to multiple frequency bands, the eNB notifies that the multiple frequency bands are supportable. In this case, the eNB notifies of the legacy frequency bands in the legacy freqBandIndicator IE while the new frequency bands are notified in a newly defined IE. Unlike the legacy freqBandIndicator indicating only one frequency band, the newly defined IE is capable of indicating one or more frequency bands. In the present exemplary embodiment, this new IE is referred to as ExtfreqBandIndicator or MultiBandInfoList (hereinafter, interchangeably recited with the term 'added frequency band indicator').

If there is at least one frequency band among the frequency bands indicated in the freqBandIndicator IE and the ExtfreqBandIndicator IE provided in a specific cell, the UE determines that the cell is accessible.

More particularly, when there are two or more frequency bands indicated in the ExtfreqBandIndicator, the UE selects one of the frequency bands according to a predetermined rule. If the UE supports multiple frequency bands, there can be UE-preferable priorities of frequency bands in view of the eNB or network. For example, if the eNB supports band X and band Y, the UE supporting both bands X and Y may prefer the band X to the band Y. Accordingly, the UE and the eNB share a predetermined rule to indicate the priority implicitly for selecting one of plural frequency bands. For example, the eNB arranges the frequency bands in UE selection priority in the ExtfreqBandIndicator such that, if there are multiple UE-supportable frequency bands among the frequency bands indicated in the ExtfreqBandIndicator, the UE selects the supportable-frequency band arranged first among the supportable frequency bands.

FIG. 3 is a signaling diagram illustrating a procedure for selecting one of frequency bands indicated by an extfreqBandIndicator IE in a method according to an exemplary embodiment of the present invention. As described above, the extfreqBandIndicator IE is capable of including information on the multiple frequency bands.

Referring to FIG. 3, it is assumed that a freqBandIndicator 300 includes a band 5 305 as one of the legacy frequency bands and an extfreqbandIndicator 310 includes a plurality frequency bands of band 22 315, band 26 320, and band 19 325 filled in sequence. From the frequency band indicators, it is possible to know that the corresponding cell supports band 5, band 22, band 26, and band 19.

Assuming that two frequency bands of band 26 and band 19 are supported as indicated in the extfreqbandIndicator IE, the UE selects one of the two supportable frequency bands. According to an exemplary embodiment of the present invention, the frequency band included first in the extfreqbandIndicator IE is selected for use by the UE.

Although the UE selects a new frequency band, the uplink center frequency and the downlink center frequency of the neighbor E-UTRA cell are derived from the values indicated in the legacy freqBandIndicator IE and InterFreqCarrierFreqInfo IE. This is because there is no need to increase the signaling overhead unnecessarily by defining as many new IEs as the frequency bands supported by the cell, since each of the corresponding serving cell and the neighbor cell has one center frequency in each of uplink and downlink despite the serving cell supporting multiple frequency bands. The present exemplary embodiment also proposes a method for deriving the uplink center frequency using the Default distance specified in 3GPP standard TS36.101.

For the additionalSpectrumEmission IE broadcast in SIB2, a new IE is defined for the new frequency band. This IE is band-specific, and it is not possible to reuse the related-art value for the new band. In the present exemplary embodiment, the new IE is referred to as extAdditionalSpectrumEmission (hereinafter, interchangeably recited with the term 'extra additional spectrum emission'). The number of new IEs matches the number of new frequency bands supported by the cell. For example, if the cell supports two new frequency bands, a total of two extAdditionalSpectrumEmission IEs are generated for the respective bands. In a case where multiple extAdditionalSpectrumEmission IEs are configured for the respective frequency bands, these IEs match the frequency bands filled in the ExtfreqBandIndicator in sequence.

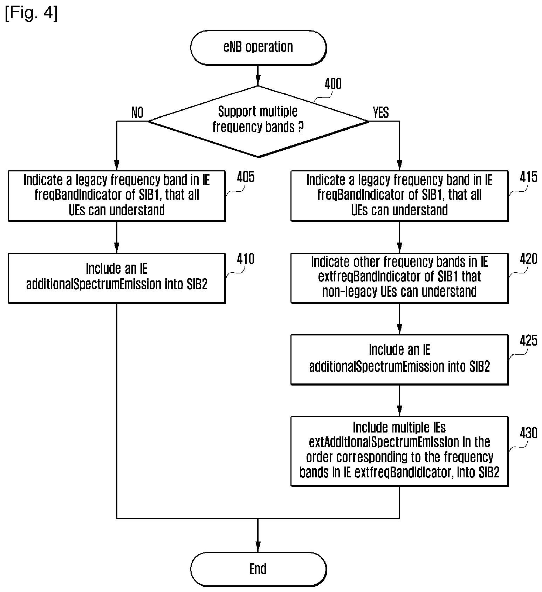

FIG. 4 is a flowchart illustrating an eNB operation of a method according to an exemplary embodiment of the present invention.

FIG. 4 is directed to the eNB operation for filling the SIB1 and SIB2 with the multiple operating frequency bands and the extAdditionalSpectrumEmission IEs.

Referring to FIG. 4, the eNB determines whether it supports multiple operating frequency bands at step 400. If the eNB does not support multiple operating frequency bands, the eNB configures the freqBandIndicator IE of the SIB1, which all UEs can understand, to indicate a legacy frequency band as in the related-art method at step 405. The eNB includes the additionalSpectrumEmission value corresponding to the frequency band into the SIB2 at step 410. Afterward, the eNB broadcasts the generated SIBs (not shown).

Otherwise if the eNB supports multiple operating frequency bands, the eNB configures the freqBandIndicator IE of the SIB1, which all UEs can understand, to indicate a legacy frequency band at step 415. Next, the eNB configures an extfreqbandIndicator, which only the non-legacy UEs can understand, to indicate one or more frequency bands with the exception of the frequency band indicated by the freqBandIndicator IE at step 420.

The eNB includes the additionalSpectrumEmission value to be applied to the legacy frequency band indicated in the freqBandIndicator into the SIB2 at step 425. Next, the eNB includes the extAdditionalSpectrumEmission IE values corresponding to the frequency bands indicated in the extfreqbandIndicator IE into the SIB2 in the same sequence as the frequency bands included in the extfreqbandIndicator IE at step 430.

Afterward, the eNB broadcasts the generated SIBs (not shown).

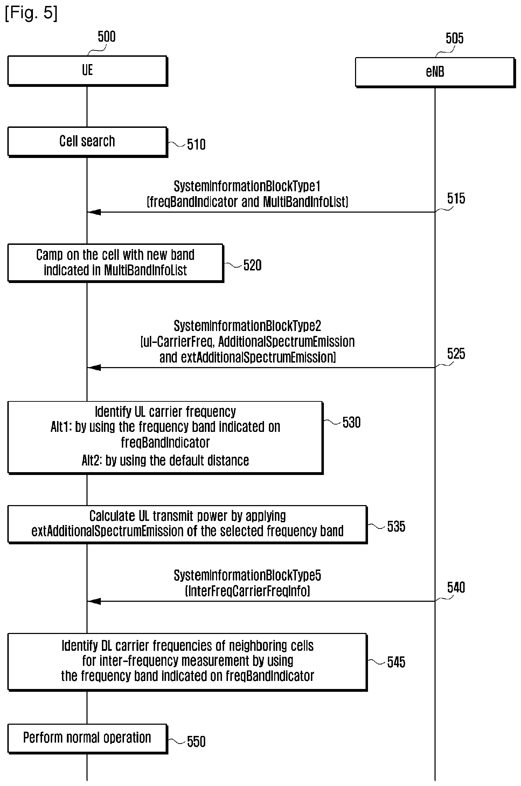

FIG. 5 is a flowchart illustrating eNB and UE operations of a method according to an exemplary embodiment of the present invention.

The UE 500 performs cell searching to discover a cell to which it camps on at step 510. If a cell having an appropriate signal strength is found, the UE 500 receives the SystemInformationBlockType1 (SIB1) broadcast by the eNB 505 of the corresponding cell at step 515.

In this case, the eNB 505 supports multiple frequency bands. Accordingly, the SIB1 received by the UE 500 includes both the freqBandIndicator and ExtfreqBandIndicator. These IEs indicate the frequency bands supported by the cells.

The UE 500 can be categorized into one of a legacy UE and a non-legacy UE. The legacy UE can decode and understand only the freqBandIndicator IE, and the non-legacy UE can decode and understand the ExtfreqBandIndicator IE as well as freqBandIndicator IE. Accordingly, the legacy UE determines whether it supports the frequency band indicated in the freqBandIndicator IE, and the non-legacy UE, if it supports at least one of the frequency bands indicated in the freqBandIndicator and ExtfreqBandIndicator IEs, determines that it is accessible to the cell.

If the UE 500 is accessible to a certain cell, this means that the access to the cell is not barred in view of the frequency band and thus the UE 500 takes a subsequent action continuously to determine whether the access to the cell is forbidden from another view point, e.g., inspecting the status of the corresponding cell using the cell ID and PLMN ID. If the UE 500 inspects the status of the cell, this case is described below.

That is, if there is no frequency band supported by the UE 500 among the frequency bands indicated in the IEs, the UE 500 determines that the access to the corresponding cell is barred. Otherwise, if there is two or more frequency bands supported by the UE 500 among the frequency bands indicated in the ExtfreqBandIndicator IE, the UE 500 selects the frequency band included first in the ExtfreqBandIndicator IE.

If the UE 500 supports a certain frequency band indicated in the ExtfreqBandIndicator IE and if the corresponding frequency band is authenticated, the UE 500 determines that it can access the corresponding cell in view of the frequency band at step 520. If the UE 500 supports the frequency band indicated in the freqBandIndicator IE, the UE 500 performs the procedure depicted in FIG. 1.

If the UE 500 determines that it cannot camp on the corresponding cell, the UE 500 performs the cell searching process again to discover another cell. If the UE 500 determines that it can access the corresponding cell in view of frequency band, the UE 500 checks the status of the cell by referencing the TAC and Cell ID of the corresponding cell. If the UE 500 checks the status of the cell, this means that the UE 500 determines whether the access to the cell is barred by the operator. Typically, the operation can bar a certain UE 500 from accessing the cells belonged to a specific Tracking Area (TA).

If a TA Update (TAU) reject message is received from a Mobility Management Entity (MME) in the TAU procedure, the UE 500 adds the "TA to the forbidden TAs for roaming" list in a TAU attempt according to a Evolved Packet System (EPS) Mobility Management (EMM) cause value included in the message so as to forbid the UE 500 to perform unnecessary access attempts. Accordingly, the UE 500 checks the status of the corresponding cell using a TAC of the cell of the frequency band it supports as above so as to determine whether the access to the corresponding cell is forbidden.

The UE 500 receives SIB2 from the eNB 505 at step 525. The SIB2 includes ul-CarrierFreq IE, additionalSpectrumEmission IE, and extAdditionalSpectrumEmission IE. These IEs are used for calculating uplink center frequency and uplink transmission power.

The UE 500 calculates the uplink center frequency of the frequency band at step 530. The present exemplary embodiment proposes two methods. The first is to calculate the uplink center frequency using Equation (1). In Equation (1), NUL denotes a UL-CarrierFreq IE value included in SIB2 and matches an ARFCN. FUL_low denotes the lowest uplink frequency of the selected frequency band, and NOffs-UL and FUL_low are defined in Table 2. The present exemplary embodiment is characterized in that, when retrieving NOffs-UL and FUL_low value in Table 2, an operating frequency band indicated in the freqBandIndicator IE is used other than the frequency band indicated in the ExtfreqBand-Indicator IE.

If the UE 500 does not support the operating frequency band indicated in the freqBandIndicator IE, the UE 500 may not understand the ARFCN provided in the SIB2. In this case, the first method is not applicable. The second method derives the uplink center frequency by applying the default distance to the frequency band. The default distance is the frequency offset value between the center frequencies of the transmission and reception carriers per band and specified in the 3GPP standard TS36.101. Table 4 shows the details of the default distance specified in the TS36.101. For example, if the UE 500 uses band 26, the uplink center frequency is the value obtained by subtracting 45 MHz from the downlink center frequency. If a new frequency band is introduced afterward, the default distance for the new frequency band will be specified in a technical specification of the standard.

Table 4 describes a default UE TX-RX frequency separation

[Table 4]

| E-UTRA Operating Band | TX - RX carrier center frequency separation |
|---|---|
| 1 | 190 MHz |
| 2 | 80 MHz |
| 3 | 95 MHz |
| 4 | 400 MHz |
| 5 | 45 MHz |
| 6 | 45 MHz |
| 7 | 120 MHz |
| 8 | 45 MHz |
| 9 | 95 MHz |
| 10 | 400 MHz |
| 11 | 48 MHz |
| 12 | 30 MHz |
| 13 | -31 MHz |
| 14 | -30 MHz |
| 17 | 30 MHz |
| 18 | 45 MHz |
| 19 | 45 MHz |
| 20 | -41 MHz |
| 21 | 48 MHz |
| 22 | 100 MHz |
| 23 | 180 MHz |
| 24 | -101.5 MHz |
| 25 | 80 MHz |
| 26 | 45 MHz |

Typically, it is a basic requirement that the downlink center frequency and uplink center frequency of a cell belongs to the same frequency band, and the distance between the downlink and uplink center frequencies may change depending on the cell. In order to support such a case, the eNB 505 broadcasts an ARFCN indicating the uplink center frequency. However, it may not be supported to configure the distance between the downlink and uplink center frequencies flexibly, but the default distance is applied to all cells. Accordingly, when the default distance is applied to a certain cell supporting multiple frequency bands, then eNB 505 signals only one ARFCN indicating the uplink center frequency and, if there is only one ARFCN indicating uplink center frequency, the UE 500 calculates the uplink center frequency using the ARFCN (when the UE 500 has selected the frequency band indicated by freqBandIndicator) or by applying the default distance (when the UE 500 has selected the frequency band indicated by ExtfreqBandIndicator). If the default distance is not applied to a certain cell supporting multiple frequency bands, the eNB 505 signals the ARFCN indicating the uplink center frequency per frequency band separately. Accordingly, the operation of the UE selected the frequency band indicated by the ExtfreqBandIndicator can be defined as follows.

If only one ARFCN indicating the uplink center frequency is signaled in the system information, the uplink center frequency is calculated by applying the default distance.

If multiple ARFCNs indicating uplink center frequencies are signaled in the system information, the uplink center frequency is calculated by applying the uplink ARFCN corresponding to the frequency band that has been selected.

The system information also includes the information on the uplink bandwidth. The number of uplink bandwidth information is always only one, and the UE 500 determines the uplink transmission resource in the corresponding cell by applying the only one uplink bandwidth information regardless whether the selected frequency band is the one indicated by the freqBandIndicator or the ExtfreqBandIndicator.

In another method, if one ARFCN indicating the uplink center frequency is signaled and if the frequency band indicated by the ExtfreqBandIndicator is selected, the UE 500 is capable of determining the uplink center frequency by applying the following rule.

If the UE 500 can understand the frequency band indicated by the freqBandIndicator and the ARFCN indicating the uplink center frequency, the UE 500 determines the uplink center frequency by applying the frequency band indicated by the freqBandIndicator and the ARFCN indicating the uplink center frequency despite the UE 500 having selected the frequency band indicated by the ExtfreqBandIndicator.

If the UE 500 cannot understand the frequency band indicated by the freqBandIndicator and the ARFCN indicating the uplink center frequency, the UE 500 calculates the uplink center frequency by applying the downlink center frequency of the current cell determined in the cell search process and the default distance of the frequency band selected in the ExtfreqBandIndicator. That is, the UE 500 calculates the uplink center frequency by subtracting the default distance defined for the selected frequency band from the downlink center frequency of the cell. For reference, if the uplink center frequency is calculated by applying the default distance, this means that the UE 500 determines the value obtained by subtracting the default distance defined for the UE-selected frequency band from the downlink center frequency recognized in the cell search process as the uplink center frequency throughout the present disclosure.

The UE 500 calculates the uplink transmission power using the extadditionalSpectrumEmission IE at step 535. When multiple extAdditionalSpectrumEmission IEs corresponding to the respective frequency bands exist, the UE 500 uses the extadditionalSpectrumEmission IE values corresponding to the frequency bands included in the ExtfreqBandIndicator in sequence. This IE is also used to derive A-MPR value used for calculating uplink transmission power value along with the operating frequency band. The relationship between the Additional-Maximum Power Reduction (A-MPR) and uplink transmission power value has been described above.

Next, the UE 500 receives SIB5 at step 540. The SIB5 includes InterFreqCarrierFreqInfo IE. The number of InterFreqCarrierFreqInfo IEs can configured as many as the number of neighbor E-UTRA cells. Each IE matches to a neighbor E-UTRA cell. This IE is used to derive the downlink center frequency of the neighbor E-UTRA cell to perform inter-frequency measurement.

The UE 500 calculates the downlink center frequency of the neighbor E-UTRA cell to perform inter-frequency measurement at step 545. The downlink center frequency of the neighbor E-UTRA cell is calculated according to Equation (5). In Equation (5), NDL denotes dl-CarrierFreq IE value included in the interFreqCarrierFreqInfo and matches to ARFCN. The FDL_low denotes the lowest downlink frequency of the selected frequency band. NOffs and FDL_low are defined in Table 2. The present exemplary embodiment is characterized in that, when retrieving NOffs-UL and FUL_low value in Table 2, an operating frequency band indicated in the freqBandIndicator IE is applied other than the frequency band indicated in the ExtfreqBandIndicator IE.

Afterward, the UE 500 starts normal operation at step 550. For example, the UE 500 is capable of performing one of the cell reselection, paging message reception monitoring, system information change monitoring, RRC connection configuration, and data communication, as needed.

Among the above-enumerated normal operations, the present exemplary embodiment proposes the cell reselection operation. That is, the present exemplary embodiment proposes the UE 500 operation for determining whether to take the E-UTRA frequencies configured with multiple frequency bands into consideration in SIB5.

The SIB5 is capable of including one or more E-UTRA frequency-related information and broadcast neighbor frequency information. The SIB5 includes the following information per E-UTRA frequency that is applied in cell reselection to the corresponding E-UTRAN frequency.

dl-CarrierFreq = ARFCN-ValueEUTRA
q-RxLevMin, p-Max, t-ReselectionEUTRA, threshX-High, threshX-Low,
cellReselectionPriority, etc., list of Frequency Bands (FBs) to which E-UTRAN frequencies, with the exception of the frequency band mapped to dl-CarrierFreq, belongs (hereinafter, additional FB list)

The UE 500 operates as follows in performing the inter-frequency cell reselection to the frequency 1 as a certain E-UTRA frequency.

1) If the cell reselection priority of frequency 1 is higher than that of a current serving frequency, the UE 500 supports the frequency band mapped to dl-CarrierFreq of frequency 1. Otherwise, if the UE 500 does not support the frequency band, the UE 500 supports one of the frequency bands included in the additional FB list, and if the channel quality of the best cell among the cells belonging to the frequency 1 is equal to or higher than a predetermined threshold (threshX-High) and if the best cell is not access-barred, the UE 500 reselects the cell.
2) If the cell reselection priority of frequency 1 is lower than that of a current serving frequency, the UE 500 supports the frequency band mapped to dl-CarrierFreq of the frequency 1. Otherwise, if the UE 500 does not support the frequency band, the UE 500 supports one of the frequency bands included in the additional FB list. Also, if the channel quality of the best cell on the current serving frequency is equal to or less then threshX-Low, if the channel quality of the best cell among the cells belonged to frequency 1 is equal to or higher a than a predetermined threshold, and if the cell is not in access-barred state, the UE 500 selects the best cell.

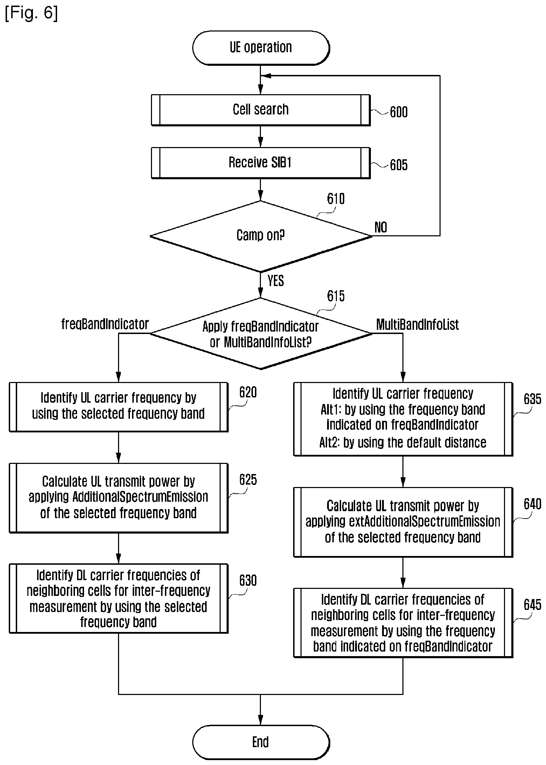

FIG. 6 is a flowchart illustrating a UE operation of a method according to an exemplary embodiment of the present invention.
The UE performs cell searching to discover a cell to camp on at step 600. If a cell having an appropriate signal strength is found, the UE receives SIB1 broadcast by the eNB corresponding to the cell at step 605.
The UE checks the received SIB1 to determine whether the frequency band indicated by the freqBandIndicator or ExtfreqBandIndicator IEs included in the SIB1 is a supportable frequency band and whether the corresponding frequency band is capable of being authenticated for campon at step 610.
If it is determined not to camp on the cell, the UE returns the procedure to step 600 to perform the cell searching process again to discover another cell.
Otherwise, if it is determined to camp on the cell, the UE selects one of the frequency bands indicated by the freqBandIndicator IE or ExtfreqBandIndicator IE at step 615. At this time, since the legacy UE can only decode the freqBandIndicator IE, the procedure goes to step 620. Meanwhile, the non-legacy UE is capable of decoding both the freqBandIndicator and ExtfreqBandIndicator IEs. If the frequency band indicated in the ExtfreqBandIndicato IE is selected, the procedure goes to step 635.
At step 620, the UE calculates the uplink center frequency according to Equation (1). In the calculation, the NOffs-UL and FUL-low derived by applying the operating frequency band indicated by ul-CarrierFreq IE and freqBand-Indicator included in the SIB2 are used.
The UE calculates the uplink transmission power using additionalSpectrumEmissioin IE included in the SIB2 at step 625. According to an exemplary embodiment of the present invention, when multiple extAdditionalSpectrumEmission IEs corresponding to multiple frequency bands are included, the uplink transmission power is calculated using the extadditionalSpectrumEmission IEs corresponding in sequence to the applied frequency bands among the frequency bands included in the ExtfreqBandIndicato IE.
The UE calculates the downlink center frequency of the neighbor E-UTRA cell at step 630. In the calculation, the NOffs-UL and FUL_low derived by applying the operating frequency band indicated by the dl-CarrierFreq IE and freqBandIndicator IE of the interFreqCarrierFreqInfo included in the SIB5 are used.
At step 635, the UE calculates the uplink center frequency. The present exemplary embodiment proposes two methods. The first method is to calculate the uplink center frequency according to Equation (1). In the calculation, the NOffs-UL and FUL_low derived by applying the operating frequency band indicated by the ul-CarrierFreq IE and freqBand-Indicator IE included in the SIB2 are used. The second method is to calculate the uplink center frequency by applying the default distance to the corresponding frequency band.
The UE calculates the uplink transmission power using the extadditionalSpectrumEmission IE included in the SIB2 at step 640. Next, the UE calculates the downlink center frequency of the neighbor E-UTRA cell using Equation (5) at step 645. In the calculation, the NOffs-UL and FUL_low derived by applying the operating frequency band indicated by the dl-CarrierFreq IE and freqBandIndicator IE of the interFreqCarrierFreqInfo included in the SIB5 are used.

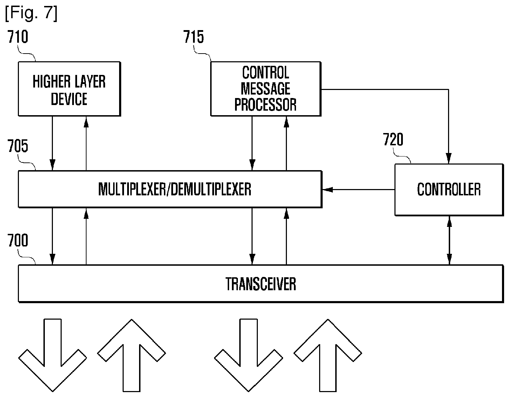

FIG. 7 is a block diagram illustrating a configuration of a UE according to an exemplary embodiment of the present invention.

The UE includes higher layer device 710 for processing data and a control message processor 715 for processing control messages. The UE multiplexes the transmission data and control signals by means of the multiplexer 705 and transmits the multiplexed signals through the transceiver 700 under the control of the controller 720. The UE also demultiplexes the signal received through the transceiver 700 and delivers the demultiplexed signal to the higher layer device 710 or the control message processor 715 according to the message information.

In more detail, the controller 720 controls the UE to receive the first system information including a frequency band indicator indicating a frequency band supported by the eNB and an additional frequency band indicator indicating one or more frequency bands supported by the eNB. The controller 720 determines whether there is at least one supportable frequency band among the frequency bands indicated by the frequency band indicator and the additional frequency band indicators. If there is at least one supportable frequency band, the controller 720 controls the UE to attempt access to the eNB.

According to an exemplary embodiment of the present invention, if there are two or more supportably frequency bands among the frequency bands indicated by the additional frequency band indicators, the controller 720 is capable of controlling the UE to select the frequency band indicated by the first included frequency band indicator as the frequency band to access.

The controller 720 is capable of controlling the UE to receive the second system information including an additional spectrum emission value corresponding to the frequency band indicated by the frequency band indicator and at least one extra additional spectrum emission value corresponding to at least one frequency bands.

In this case, the at least one extra additional spectrum emission value corresponds to the frequency bands supported by the eNB in sequence according to the additional frequency band indicator.

The controller 720 calculates the uplink transmission power based on the spectrum emission value corresponding to the frequency band to which the UE attempts access.

Meanwhile, the second system information is capable of further including uplink carrier frequency information and, in this case, the controller 720 calculates the uplink center frequency based on the uplink carrier frequency information.

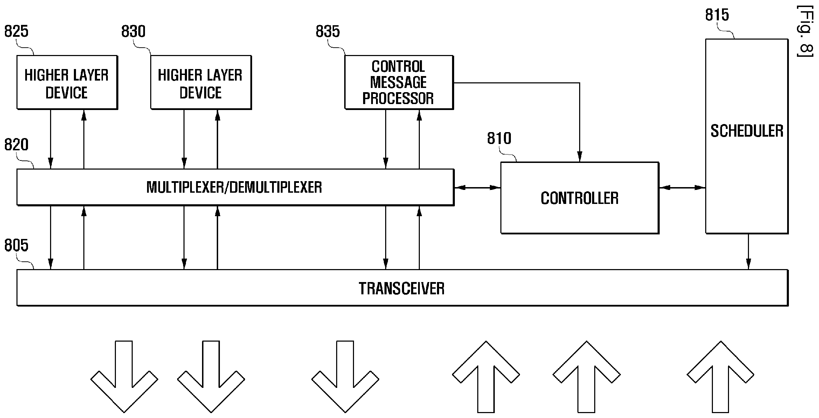

FIG. 8 is a block diagram illustrating a configuration of an eNB according to an exemplary embodiment of the present invention. Referring to FIG. 8, the eNB includes a transceiver 805, a controller 810, a multiplexer/demultiplexer 820, a control message processor 835, a plurality of higher layer processors 825 and 830, and a scheduler 815.

The transceiver 805 transmits data and control signals on the downlink carrier and receives data and control signals on the uplink carrier. In a case where multiple carriers are configured, the transceiver 805 transmits/receive data and controls signals on the multiple carriers.

The multiplexer/demultiplexer 820 multiplexes the data generated by the higher layer devices 825 and 830 and the control message processor 835 and demultiplexes the data received by the transceiver 805 and delivers the demultiplexed data to the appropriate higher layer processors 825 and 830, the control message processor 835, and the controller 810. The control unit 810 determines whether to additionally include ExtfrequencyBandIndicator IE in the SIB1 and whether to additionally include extadditionalSpectrumEmission IE in the SIB2 depending on whether the eNB support multiple frequency bands.

The control message processor 835 generates SIB1 and SIB2 to the lower layer according to the instruction of the controller 810.

The higher layer devices 825 and 830 are capable of being activated per UE per service to process and deliver a user service such as File Transfer Protocol (FTP) and Voice over Internet Protocol (VoIP) to the multiplexer/demultiplexer and process and deliver the data from the multiplexer/demultiplexer 820 to the service application on the higher layer.

The scheduler 815 allocates transmission resources to the UE at predetermined timing in consideration of the UE's buffer state, channel condition, and UE's Active Time; and controls the transceiver to process the signal transmitted by or to be transmitted to the UE.

In more detail, the controller 810 controls the eNB to generates the first system information including the frequency band indicator indicating a frequency band supported by the eNB and an additional frequency band indicator indicating at least one frequency band supported by the eNB. The controller 810 controls the eNB to broadcast the first system information.

The control unit 810 controls the eNB to generate the second system information including an additional spectrum emission value corresponding to the frequency band indicated by the frequency band indicator and at least one extra additional spectrum emission value corresponding to at least one frequency band indicated by the additional frequency band indicators. The controller 810 also controls the eNB to broadcast the second system information. The above-described exemplary embodiments of the present invention can be summarized in that the eNB broadcasts a frequency band through a first FB-related information element and at least one frequency band through a second FB-related information element. The UE checks the frequency bands indicated by the first and second FB-related IEs to determine whether there is at least one supportable band and, if so, that the cell is accessible.

The eNB broadcasts an AdditionalSpectrumemission information through the first additional emission-related IE and at least one AdditionalSpectrumEmisison information through the second additional emission-related IE. The AdditionalSpectrumEmission of the first additional emission-related IE corresponds to the frequency band of the first IE, and the AdditionalSpectrumEmission of the second additional emission-related IE corresponds to the frequency band of the second IE. The UE uses the AdditionalSpectrumEmission corresponding to the selected band to determine the uplink transmission power.

If one or more frequency bands are supported, the UE selects a frequency band according to a predetermined rule. The rule can be to select the FB filled first among the FBs included in the second IE.

According to another exemplary embodiment of the present invention, if the FB indicated in the first FB-related IE is selected, the UE determines the uplink center frequency using ARFCN information and, if the FB indicated by the first FB-related IE is not selected, determines the uplink center frequency by applying a default distance.

If the FB indicated by the first FB-related IE is not selected (or if the FB indicated by the second FB-related IE), the UE determines the uplink center frequency using the UL ARFCN information of the legacy IE and configures the uplink transmission power by applying AdditionalSpectrumEmission of the second additional emission-related IE.

As described above, the method and apparatus for supporting multiple frequency bands according to exemplary embodiments of the present invention are capable of supporting multiple frequency bands efficiently in an LTE-A Release-11 system to which new frequency bands are added as overlapping with the legacy frequency band.

While the invention has been shown and described in detail with reference to certain exemplary embodiments thereof, it will be understood by those skilled in the art that various changes in form and details may be made therein without departing from the scope of the present invention as defined in the appended claims.

**Claims**

1.   A method performed by a terminal in a wireless communication system, the method comprising:

     receiving (605), from a base station through first system information, a first frequency band indicator indicating a frequency band supported by the base station and second frequency band indicators indicating multiple frequency bands supported by the base station;
     identifying (610) whether the first frequency band indicator and the second frequency band indicators include at least one frequency band supported by the terminal;
     selecting (620), in case that the second frequency band indicators include two or more frequency bands supported by the terminal, a frequency band indicated first among the two or more frequency bands; and
     attempting access to the base station based on the frequency band indicated first.

2.   The method of claim 1, further comprising:
     identifying (625) an uplink transmission power based on spectrum emission information among multiple spectrum emission information.

3.   The method of claim 2, further comprising:
     applying spectrum emission information among two or more spectrum emission information supported by the terminal from the multiple spectrum emission information.

4.   A terminal in a wireless communication system, the terminal comprising:

     a transceiver (700); and
     a controller (720) configured to:

         receive, from a base station via the transceiver (700) through first system information, a first frequency band indicator indicating a frequency band supported by the base station and second frequency band indicators indicating multiple frequency bands supported by the base station,
         identify whether the first frequency band indicator and the second frequency band indicators include at least one frequency band supported by the terminal,
         select, in case that the second frequency band indicators include two or more frequency bands supported by the terminal, a frequency band indicated first among the two or more frequency bands, and
         attempt access to the base station based on the frequency band indicated first.

5. The terminal of claim 4, wherein the controller (720) is further configured to identify an uplink transmission power based on spectrum emission information among multiple spectrum emission information.

6. The terminal of claim 5, wherein the controller (720) is further configured to apply spectrum emission information among two or more spectrum emission information supported by the terminal from the multiple spectrum emission information.

7. A method performed by a base station in a wireless communication system, the method comprising:

generating first system information including a first frequency band indicator indicating a frequency band supported by the base station and second frequency band indicators indicating multiple frequency bands supported by the base station; and
broadcasting the first system information,
wherein the multiple frequency bands indicated by the second frequency band indicators are arranged by the base station such that a terminal selects a frequency band indicated first among two or more frequency bands.

8. A base station in a wireless communication system, the base station comprising:

a transceiver (805); and
a controller (810) configured to:

generate first system information including a first frequency band indicator indicating a frequency band supported by the base station and second frequency band indicators indicating multiple frequency bands supported by the base station, and
broadcast, via the transceiver (805), the first system information,
wherein the multiple frequency bands indicated by the second frequency band indicators are arranged by the base station such that a terminal selects a frequency band indicated first among two or more frequency bands.

**Patentansprüche**

1. Verfahren, welches von einem Endgerät in einem drahtlosen Kommunikationssystem ausgeführt wird, wobei das Verfahren Folgendes umfasst:

Empfangen (605) eines ersten Frequenzbandanzeigers, der ein Frequenzband anzeigt, das von der Basisstation unterstützt wird, und zweiter Frequenzbandanzeiger, die mehrere Frequenzbänder anzeigen, die von der Basisstation unterstützt werden, von einer Basisstation durch erste System informationen;
Identifizieren (610), ob der erste Frequenzbandanzeiger und die zweiten Frequenzbandanzeiger mindestens ein Frequenzband enthalten, das von dem Endgerät unterstützt wird;
Auswählen (620), falls die zweiten Frequenzbandanzeiger zwei oder mehr Frequenzbänder enthalten, die von dem Endgerät unterstützt werden, eines zuerst angezeigten Frequenzbandes aus den zwei oder mehr Frequenzbändern; und
Versuchen, auf die Basisstation zuzugreifen, basierend auf dem zuerst angezeigten Frequenzband.

2. Verfahren nach Anspruch 1, welches ferner Folgendes umfasst:
Identifizieren (625) einer Uplink-Übertragungsleistung basierend auf Spektralem issionsinformationen unter mehreren Spektralemissionsinformationen.

3. Verfahren nach Anspruch 2, welches ferner Folgendes umfasst:
Anwenden von Spektralemissionsinformationen unter zwei oder mehr Spektralemissionsinformationen, die von dem Endgerät unterstützt werden, aus den mehreren Spektralemissionsinformationen.

4. Endgerät in einem drahtlosen Kommunikationssystem, wobei das Endgerät Folgendes umfasst:

einen Transceiver (700); und
eine Steuerung (720), die konfiguriert ist zum:

Empfangen eines ersten Frequenzbandanzeigers, der ein Frequenzband anzeigt, das von der Basisstation unterstützt wird, und zweiter Frequenzbandanzeiger, die mehrere Frequenzbänder anzeigen, die von der Basisstation unterstützt werden, von einer Basisstation über den Transceiver (700) durch erste Systeminformationen,

Identifizieren, ob der erste Frequenzbandanzeiger und die zweiten Frequenzbandanzeiger mindestens ein Frequenzband enthalten, das von dem Endgerät unterstützt wird,

Auswählen, falls die zweiten Frequenzbandanzeiger zwei oder mehr Frequenzbänder enthalten, die von dem Endgerät unterstützt werden, eines zuerst angezeigten Frequenzbandes aus den zwei oder mehr Frequenzbändern, und

Versuchen, auf die Basisstation zuzugreifen, basierend auf dem zuerst angezeigten Frequenzband.

5. Endgerät nach Anspruch 4, wobei die Steuerung (720) ferner konfiguriert ist, um eine Uplink-Übertragungsleistung basierend auf Spektralem issionsinformationen unter mehreren Spektralemissionsinformationen zu identifizieren.

6. Endgerät nach Anspruch 5, wobei die Steuerung (720) ferner konfiguriert ist, um Spektralemissionsinformationen unter zwei oder mehr Spektralemissionsinformationen, die von dem Endgerät unterstützt werden, aus den mehreren Spektralemissionsinformationen anzuwenden.

7. Verfahren, welches von einer Basisstation in einem drahtlosen Kommunikationssystem ausgeführt wird, wobei das Verfahren Folgendes umfasst:

Erzeugen erster System informationen einschließlich eines ersten Frequenzbandanzeigers, der ein Frequenzband anzeigt, das von der Basisstation unterstützt wird, und zweiter Frequenzbandanzeiger, die mehrere Frequenzbänder anzeigen, die von der Basisstation unterstützt werden; und

Ausstrahlen der ersten Systeminformationen,
wobei die mehreren Frequenzbänder, die durch die zweiten Frequenzbandanzeiger angezeigt werden, von der Basisstation so angeordnet werden, dass ein Endgerät ein zuerst angezeigtes Frequenzband aus zwei oder mehr Frequenzbändern auswählt.

8. Basisstation in einem drahtlosen Kommunikationssystem, wobei die Basisstation Folgendes umfasst:

einen Transceiver (805); und
eine Steuerung (810), die konfiguriert ist zum:

Erzeugen erster Systeminformationen einschließlich eines ersten Frequenzbandanzeigers, der ein Frequenzband anzeigt, das von der Basisstation unterstützt wird, und zweiter Frequenzbandanzeiger, die mehrere Frequenzbänder anzeigen, die von der Basisstation unterstützt werden, und

Ausstrahlen der ersten System informationen über den Transceiver (805),
wobei die mehreren Frequenzbänder, die durch die zweiten Frequenzbandanzeiger angezeigt werden, von der Basisstation so angeordnet werden, dass ein Endgerät ein zuerst angezeigtes Frequenzband aus zwei oder mehr Frequenzbändern auswählt.

## Revendications

1. Procédé mis en œuvre par un terminal dans un système de communication sans fil, le procédé comprenant :

recevoir (605), à partir d'une station de base par l'intermédiaire de premières informations système, un premier indicateur de bande de fréquences indiquant une bande de fréquences prise en charge par la station de base et des deuxièmes indicateurs de bande de fréquences indiquant plusieurs bandes de fréquences prises en charge par la station de base ;

identifier (610) si le premier indicateur de bande de fréquences et les deuxièmes indicateurs de bande de fréquences comprennent au moins une bande de fréquences prise en charge par le terminal ;

sélectionner (620), dans le cas où les deuxièmes indicateurs de bande de fréquences comprendraient deux ou plusieurs bandes de fréquences prises en charge par le terminal, une bande de fréquences indiquée en premier parmi les deux ou plusieurs bandes de fréquences ; et

tenter d'accéder à la station de base sur la base de la bande de fréquences indiquée en premier.

**2.** Procédé selon la revendication 1, comprenant en outre :
identifier (625) une puissance de transmission de liaison montante sur la base d'informations d'émission de spectre parmi de multiples informations d'émission de spectre.

**3.** Procédé selon la revendication 2, comprenant en outre :
appliquer des informations d'émission de spectre parmi deux ou plusieurs informations d'émission de spectre prises en charge par le terminal à partir des multiples informations d'émission de spectre.

**4.** Terminal dans un système de communication sans fil, le terminal comprenant :

un émetteur-récepteur (700) ; et
un contrôleur (720) configuré pour :

recevoir, à partir d'une station de base par l'intermédiaire de l'émetteur-récepteur (700) à travers de premières informations système, un premier indicateur de bande de fréquences indiquant une bande de fréquences prise en charge par la station de base et des deuxièmes indicateurs de bande de fréquences indiquant de multiples bandes de fréquences prises en charge par la station de base,
identifier si le premier indicateur de bande de fréquences et les deuxièmes indicateurs de bande de fréquences comprennent au moins une bande de fréquences prise en charge par le terminal,
sélectionner, dans le cas où les deuxièmes indicateurs de bande de fréquences comprendraient deux ou plusieurs bandes de fréquences prises en charge par le terminal, une bande de fréquences indiquée en premier parmi les deux ou plusieurs bandes de fréquences, et
tenter d'accéder à la station de base sur la base de la bande de fréquences indiquée en premier.

**5.** Terminal selon la revendication 4, où le contrôleur (720) est configuré en outre pour identifier une puissance de transmission de liaison montante sur la base d'informations d'émission de spectre parmi de multiples informations d'émission de spectre.

**6.** Terminal selon la revendication 5, où le contrôleur (720) est configuré en outre pour appliquer des informations d'émission de spectre parmi deux ou plusieurs informations d'émission de spectre prises en charge par le terminal à partir des multiples informations d'émission de spectre.

**7.** Procédé mis en œuvre par une station de base dans un système de communication sans fil, le procédé comprenant :

générer des premières informations système incluant un premier indicateur de bande de fréquences indiquant une bande de fréquences prise en charge par la station de base et des deuxièmes indicateurs de bande de fréquences indiquant plusieurs bandes de fréquences prises en charge par la station de base ; et
diffuser les premières informations système,
où les multiples bandes de fréquences indiquées par les deuxièmes indicateurs de bande de fréquences sont agencées par la station de base de telle sorte qu'un terminal sélectionne une bande de fréquences indiquée en premier parmi deux ou plusieurs bandes de fréquences.

**8.** Station de base dans un système de communication sans fil, la station de base comprenant :

un émetteur-récepteur (805) ; et
un contrôleur (810) configuré pour :

générer des premières informations système incluant un premier indicateur de bande de fréquences indiquant une bande de fréquences prise en charge par la station de base et des deuxièmes indicateurs de bande de fréquences indiquant plusieurs bandes de fréquences prises en charge par la station de base, et
diffuser, par l'intermédiaire de l'émetteur-récepteur (805), les premières informations système,
où les multiples bandes de fréquences indiquées par les deuxièmes indicateurs de bande de fréquences sont agencées par la station de base de telle sorte qu'un terminal sélectionne une bande de fréquences indiquée en premier parmi deux ou plusieurs bandes de fréquences.

[Fig. 1]

100

UE

105

eNB

Cell search ～110

SystemInformationBlockType1
(freqBandIndicator) 115

Camp on the cell ～120

SystemInformationBlockType2
(ul-CarrierFreq, additionalSpectrumEmission) 125

Identify UL carrier frequency by using
the selected frequency band ～130

Calculate UL transmit power by applying
AdditionalSpectrumEmission of the selected frequency band ～135

SystemInformationBlockType5
(InterFreqCarrierFreqInfo) 140

Identify DL carrier frequencies of neighboring cells for
inter-frequency measurement by using the selected frequency band ～145

Perform normal operation ～150

[Fig. 2]

800 MHz                                                          900 MHz

200

Legacy band 5

| Uplink | | Downlink |
824      849    869      894

Band 19

Band 18

205

Legacy band 18 & 19

| UL | UL | | DL | DL |
815   830   845   860   875   890

210

new band 26

| Uplink | | Downlink |
814      849    859      894

[Fig. 3]

300                    310

IE freqBandIndicator   IE ExtfreqBandIndicator

305      Band 5                Band 22        315

320

                              Band 26        Frequency band
                                             applied by UE

Frequency band
supported by UE               Band 19        325

[Fig. 4]

```
                          ┌──────────────────┐
                          │  eNB operation   │
                          └──────────────────┘
                                    │
                                    ▼         400
                              ╱─────────────╲
                   NO        ╱ Support multiple╲      YES
              ◄─────────────╱  frequency bands ? ╲──────────────►
                            ╲                     ╱
                             ╲───────────────────╱
```

| Indicate a legacy frequency band in IE freqBandIndicator of SIB1, that all UEs can understand | 405 |
| Include an IE additionalSpectrumEmission into SIB2 | 410 |

| Indicate a legacy frequency band in IE freqBandIndicator of SIB1, that all UEs can understand | 415 |
| Indicate other frequency bands in IE extfreqBandIndicator of SIB1 that non-legacy UEs can understand | 420 |
| Include an IE additionalSpectrumEmission into SIB2 | 425 |
| Include multiple IEs extAdditionalSpectrumEmission in the order corresponding to the frequency bands in IE extfreqBandIdicator, into SIB2 | 430 |

End

[Fig. 5]

[Fig. 6]

```
                    ┌─────────────────┐
                    │  UE operation   │
                    └────────┬────────┘
                             │
                    ┌────────▼────────┐
                    │   Cell search   │──600
                    └────────┬────────┘
                             │
                    ┌────────▼────────┐
                    │   Receive SIB1  │──605
                    └────────┬────────┘
                             │          610
                         ╱───▼───╲
                        ╱  Camp on? ╲────── NO ──┐
                        ╲           ╱            │
                         ╲───┬───╱               │
                           YES                   │
                             │      615          │
                     ╱───────▼────────╲          │
   freqBandIndicator╱ Apply freqBandIndicator╲ MultiBandInfoList
   ┌───────────────╱  or MultiBandInfoList?   ╲──────────┐
   │               ╲                          ╱          │
   │                ╲────────────────────────╱           │
   │                                                     │
┌──▼────────────────────┐                   ┌────────────▼──────────┐
│ Identify UL carrier    │──620              │ Identify UL carrier    │──635
│ frequency by using the │                   │ frequency              │
│ selected frequency band│                   │ Alt1: by using the     │
└──────────┬─────────────┘                   │ frequency band         │
           │                                 │ indicated on           │
┌──────────▼─────────────┐                   │ freqBandIndicator      │
│ Calculate UL transmit   │──625             │ Alt2: by using the     │
│ power by applying       │                   │ default distance       │
│ AdditionalSpectrumEmission│                 └────────────┬──────────┘
│ of the selected         │                               │
│ frequency band          │                   ┌────────────▼──────────┐
└──────────┬─────────────┘                   │ Calculate UL transmit  │──640
           │                                 │ power by applying      │
┌──────────▼─────────────┐                   │ extAdditionalSpectrum  │
│ Identify DL carrier     │──630             │ Emission of the        │
│ frequencies of          │                   │ selected frequency band│
│ neighboring cells for   │                   └────────────┬──────────┘
│ inter-frequency         │                               │
│ measurement by using the│                   ┌────────────▼──────────┐
│ selected frequency band │                   │ Identify DL carrier    │──645
└──────────┬─────────────┘                   │ frequencies of         │
           │                                 │ neighboring cells for  │
           │                                 │ inter-frequency        │
           │                                 │ measurement by using the│
           │                                 │ frequency band indicated│
           │                                 │ on freqBandIndicator   │
           │                                 └────────────┬──────────┘
           │                                              │
           │          ┌─────────────────┐                │
           └──────────►      End         ◄────────────────┘
                      └─────────────────┘
```

[Fig. 7]

710

715

HIGHER LAYER
DEVICE

CONTROL
MESSAGE
PROCESSOR

720

705

MULTIPLEXER/DEMULTIPLEXER

CONTROLLER

700

TRANSCEIVER

[Fig. 8]